# EUROPEAN PATENT APPLICATION

(11) **EP 1 736 945 A1**
(43) Date of publication of application: **27.12.2006**
(21) Application number: 05253563.0
(22) Date of filing: 09.06.2005
(51) Int. Cl.: G07G 1/00, G07G 3/00, G01G 19/414, G07F 7/02

(54) **A weight validating self-checkout system employing a portable data register**

(71) Applicant: NCR INTERNATIONAL INC., Dayton, Ohio 45479 (US)
(72) Inventor: Sadler, Robert Francis, Cumming Georgia 30040 (US)
(74) Representative: Williamson, Brian

(57) **Abstract**

A weight validating self-checkout system suitable for use in a retail establishment. The system employs weight validation of purchases registered by means of a portable data reader. A customer uses a portable data reader to enter each item which it is desired to purchase into a transaction log. The transaction log also suitably contains price information for each item and a price total for the order. When all desired items are entered, the customer proceeds to a checkout station. The checkout station retrieves weight information for each item in the order and computes an expected total weight. The order is weighed and the weight of the order is compared with the expected total weight. If the weight of the order does not match the expected total weight within a predetermined tolerance, the checkout station signals for an audit of the transaction.

## Description

The present invention relates generally to customer self checkout systems. More particularly, the invention relates to a self-checkout system wherein items purchased are registered using a portable scanner, and wherein checkout is accomplished by employing weight validation to compare actual weights of purchased articles against weights of items entered by a customer during checkout, in order to verify proper checkout of items.

Numerous retail establishments, such as supermarkets and general merchandise stores, are considering or using self-checkout systems to allow the customer to register his or her own purchases either during the shopping process or at ultimate checkout. There presently exist checkout systems employing portable scanners suitable for use by a customer. Upon selection of an item, the customer scans the item using a portable scanner and places the item in the cart. The scanner maintains a registry of items purchased. After completion of shopping, the customer then pays for the purchases based on the registry maintained by the scanner.

A significant drawback to widespread acceptance of any such system is the possibility of a mismatch between the total registered by the customer and the goods actually taken. For example, in using a portable scanner as described above, a customer may scan an item, place it into the cart, and then decide against purchasing the item and remove it from the cart without scanning it for deletion from the customer's inventory. Upon checkout, the customer would submit the total maintained by the scanner and would, if not alert, pay for the removed item even though it had not been purchased.

Moreover, the typical customer is not proficient in operating a portable scanner. A customer might receive a tone indicating an unsuccessful scan and fail to recognize the tone, mistakenly thinking that the item had scanned properly. The customer would then place the item in the cart even though it had not been properly registered, and at checkout the customer would not pay for the item because it would not appear in the customer's inventory.

In addition, an unscrupulous customer might deliberately neglect to scan an item before placing it in the cart, or might scan a less expensive item than the one actually placed in the cart. This fraud would result in an underpayment by the customer, and if the practice became widespread would result in serious financial losses for the retailer.

In order to prevent mismatches between the customer's purchases as entered into a self-check system, and the actual goods selected by a customer, many retailers employing customer self-check perform random manual audits of the purchases of selected customers. Each customer presents his or her inventory as registered by the self-check process, and tenders payment. For most customers, the inventory is accepted and payment is received, but some customers are subjected to an audit of their purchases for comparison against the inventory. Typically, customers to be audited are selected by a random process. Such a process has no special likelihood of auditing transactions showing a mismatch between goods and inventory, but instead the audited transactions will exhibit the characteristics of the transaction universe as a whole. Expectations that a random audit protocol will deter fraud are based on the assumption that a fear of being caught with a discrepant transaction will deter fraud or careless mistakes.

The need to perform random manual audits on transactions does not add to the efficiency of the self-check process, as to those transactions audited. Such customers must register their goods, using a portable scanner or other mechanism. They then tender payment, but instead of accepting payment, the retailer then performs the checkout process over again. In addition to duplicating work and causing expenditure of time and resources which the self-check system is intended to save, an audit gives the customer a poor impression of the retail establishment. A customer who is singled out for an audit is likely to feel insulted, believing that the retailer thinks him or her to be a thief. Even if a customer does not feel that the audit process is an accusation, he or she will have questions about the value of the self-check process, feeling that the retailer requires the customer to register his or her own purchases, and then uses a retailer employee to check behind the customer to make sure the customer performed the registry correctly. A self-check system which includes random audits is not likely to build customer loyalty.

One method for guarding against discrepancies between items scanned and items actually taken is weight validation. In a weight-validating system, a total expected weight of scanned items is computed, and compared with the actual weight of the goods. If a mismatch between actual and expected weights exceeds a predetermined amount, an audit is performed.

Weight-validation is known in systems of the prior art as a feature of a customer self-scanning station. At a self-scanning station, the customer scans each item for entry into the customer order. A list of items in the order is maintained, along with expected weights. After completing scanning, the customer places the items in a weighing area. If the actual weight matches the expected weight within predetermined tolerances, a receipt is printed and the customer takes the receipt to a checkout station in order to tender payment. Payment is accepted by a retailer employee at the checkout station.

The weight-validating systems of the prior art do not employ portable scanners. The use of a portable scanner provides an efficient shopping experience for the customer, as scanning is done during shopping and does not require a separate process conducted after shopping has been completed. Moreover, weight-validating systems of the prior art do not provide assurance that the customer has placed all items within the weighing area, and they do not provide means for tendering payment at the scanning station, without intervention by a retailer employee. Automation of customer payment would increase the efficiency of the process and decrease labor costs.

There exists, therefore, a need in the art for a weight-validating customer self-checkout system which allows a customer to employ a portable scanner during shopping, which provides assurances that all items are placed within the weighing area, and which allows for payment to be made without a need for employee intervention.

A customer checkout system according to one aspect of the present invention comprises a portable scanner which can be carried by the customer while the customer shops. As the customer selects each item, the customer scans the item and places it in a cart. The scanner registers the item to a transaction log which may be maintained in a central location. As each item is scanned, its price is preferably looked up in a price lookup table and the item and price entered in the transaction log. When the customer finishes shopping, the scanner is returned. At this point, a barcoded receipt is printed, which will serve as a lookup index to the customer's transaction. The customer then proceeds to a checkout center for payment.

When the customer arrives at the checkout center, the receipt is presented and scanned. The customer's transaction is then recalled from the transaction log. Each item in the transaction log is looked up, and its weight recalled. The total weight of the transaction is computed. At an appropriate time during the checkout process, the items purchased are placed on a weighing station. This may be at a bagging area on the counter, or alternatively the customer's cart can be rolled onto a weighing area. A camera is trained on the checkout station in order to provide a remote view of the transaction, in order to insure that the customer places all items on the weighing area. If all items are not placed on the weighing area, a retailer employee who is monitoring the remote view orders an audit of the transaction. If all items have been placed in the weighing area, the customer's items are weighed, and the weight of the items is compared to the expected weight of the items registered in the transaction log. If the actual weight matches the expected weight within a predetermined tolerance, payment is accepted from the customer and the transaction is completed. If the tolerance is exceeded, an audit is performed.

Embodiments of the present invention will now be described, by way of example, with reference to the accompanying drawings, in which:
Fig. 1 illustrates a weight-validating checkout system of the prior art;
Fig. 2 illustrates a self-checkout system using a portable scanner and employing weight validation according to the present invention;
Fig. 3 illustrates a method self-checkout employing weight validation of purchases registered by a portable scanner, according to the present invention; and
Fig. 4 illustrates additional detail for a method of self-checkout employing weight validation of purchases registered by a portable scanner, according to the present invention.

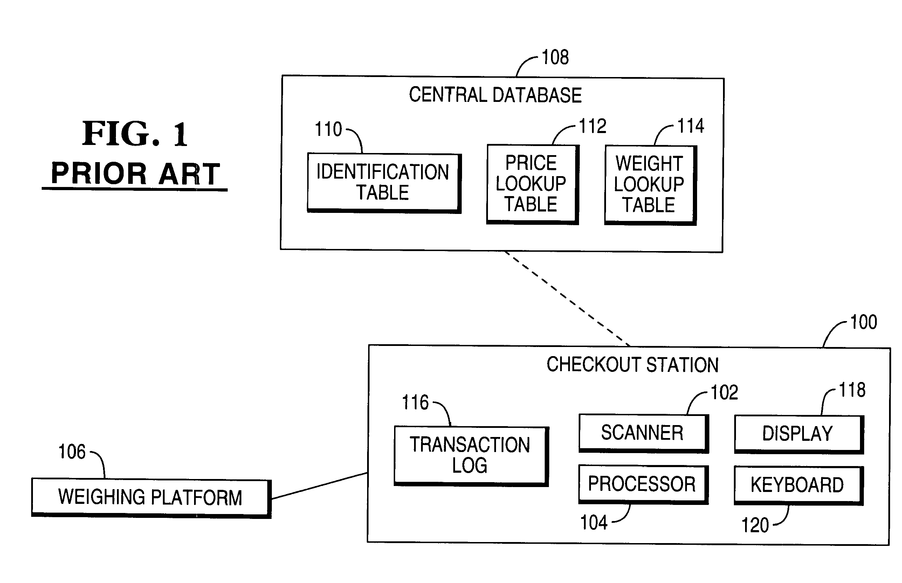

Fig. 1 illustrates a weight-validating checkout station 100 of the prior art. The station 100 includes a scanner 102, a processor 104, a scale 106 equipped to provide weight information in a manner understandable to the processor 104, and which suitably communicates with a central database 108 including various tables accessible to the processor 104, including an item identification table 110, a price lookup table 112, and an expected weight table 114. The checkout station further includes a transaction log 116, which is opened and maintained by the processor 104. The checkout system further includes a display 118 and keyboard 120 for communication with a customer.

When ready to check out, a customer approaches the checkout station 100 and activates the station 100. The station 100 opens the transaction log 116. As the customer scans each item, the processor 100 looks up each item's identifying information in the table 110 and price in the price lookup table 112, as well as expected weight in the expected weight table 114. This information is added to the transaction log 116. When the customer indicates that scanning is finished (for example by making an appropriate entry on the keyboard 118) the processor 104 computes the total price and expected total weight and directs the customer to place the goods on the scale 106. The scale transmits actual weight information to the processor 104, which compares the actual weight received from the scale 106 to the expected weight. If the actual and expected weights match within a predetermined tolerance, the customer is directed to proceed to a manned station for payment. If the expected weights do not match, the customer is directed to proceed to a manned scanning station for an audit of the transaction.

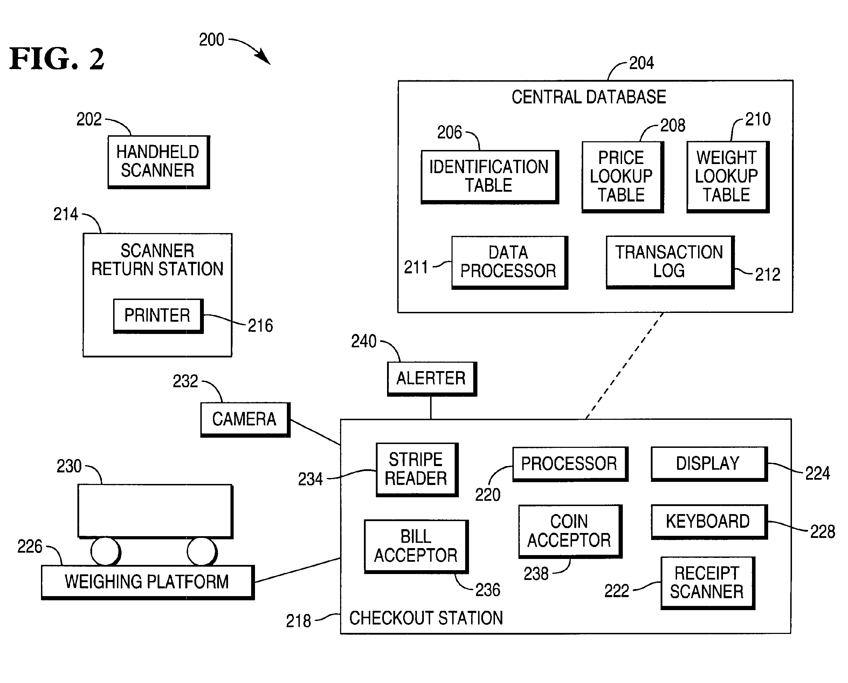

Fig. 2 illustrates a checkout system 200 according to the present invention, which may be advantageously employed by a retail establishment such as a supermarket. The checkout system 200 provides for customer self-check with weight comparison at checkout to prevent discrepancies. The system 200 includes one or more portable scanners such as the scanner 202, which may be used to scan labels of items to be purchased. The scanner 202 and similar scanners are preferably adapted to read barcode labels such as standard UPC labels. The scanner 202 suitably communicates with a central database 204 which maintains information identifying items in the retail establishment, and which further maintains an transaction log of all items scanned by each customer. The database 204 suitably maintains item identification information, price information, and weight information associated with each barcode label. This information may suitably be organized as an identification table 206, a price lookup table 208, and a weight lookup table 210. The database 204 suitably includes a data processor 211 for receiving inputs from the scanner 202 and retrieving data from processing and organizing the inputs. As each item is scanned by the scanner 202, the barcode information of the scanned item is added to a customer transaction log 212. Each customer transaction log is identified with the scanner which created it. Thus, the transaction log 212 is identified with the scanner 202. The transaction log 212 preferably includes at least the information needed to facilitate the customer's shopping and checkout. While the customer is shopping, the transaction log 212 will include item identification information for the items scanned by the customer. This may simply be the barcode data for each item, but preferably additionally includes price information and a running total, and may include any other additional information desired. It will be recognized that in order to speed processing at checkout, the data processor 211 preferably performs lookups in the identification table 206 and the price lookup table 208, and adds this information to the customer transaction log 212 as each item is scanned. When the customer has finished shopping, he or she proceeds to a scanner return station 214. The customer returns the scanner 202 to the scanner return station 214. The scanner return station 214 identifies the scanner 202 as the scanner which is being returned, and prints a barcode receipt using a printer 216. At this point, the transaction customer transaction is suspended, and the transaction log 212 is closed to further processing until the customer continues checkout. The customer is directed to a checkout station by a message displayed by the scanner return station, or by other suitable means.

The database 204 communicates with one or more checkout stations such as the checkout station 218. The checkout station 218 includes a checkout processor 220 which controls its operation and retrieves and transmits information relating to the transaction. The customer takes the barcode receipt to the checkout station 218 and submits the receipt for scanning, which is accomplished by a receipt scanner 222. The receipt scanner 222 transmits the receipt information to the checkout processor 220. Upon receiving the receipt information, the checkout processor 220 retrieves and reopens the transaction log 212 which is indexed by the information on the barcode receipt. The checkout processor 220 computes a total price for the transaction, as well as additional financial details, such as itemized pricing and tax. If prices and item identification have not previously been retrieved, the checkout processor 220 retrieves this information from the identification table 206 and the price lookup table 208 in order to compute the total. Otherwise, the checkout processor 220 simply retrieves this information from the transaction log 212. The checkout processor 220 also retrieves the weight of each item from the weight lookup table 210, and totals these weights to compute an expected weight for the order. Once the expected weight has been computed, the customer is directed to submit the order for weighing. This may suitably be done by a display 224, which instructs the customer to place the order on a weighing station 226, if this has not already been accomplished. The checkout station 218 may also include a keyboard 228, to allow the customer to provide responses to the checkout station 218. The weighing station 226 is shown here as a weighing platform onto which a customer's cart 230 can be rolled, but may alternatively be a scale on a counter, or any desired alternative configuration. The weighing station 226 registers the weight of the loaded cart 230 and subtracts the weight of the cart 230 when empty. The weighing station 226 may be monitored using a camera 232 to make sure that all the purchases are placed on the weighing station 226. After instructing the customer to place the purchases on the weighing station 226, the processor 220 activates the camera 232 and suspends operation of the checkout station 218 until the checkout processor 220 receives a signal to proceed from a store employee who is monitoring the view of the camera 232. If the purchases are not placed on the weighing station 226, a store employee will come to the checkout station 218 and conduct an audit. If the purchases are placed on the weighing station 226, a store employee issues a signal to proceed. The checkout processor 220 then resumes operation of the checkout station 218. The weighing station 226 weighs the order and electronically transmits the actual net weight of the order to the checkout processor 220, which compares the actual weight of the order to the expected weight. If the actual weight matches the expected weight within a specified tolerance, the checkout processor 220 completes the transaction and the customer pays and leaves with the order. The checkout station 218 is suitably provided with payment acceptance mechanisms such as a magnetic stripe reader 234 for reading credit or debit card information, a bill acceptor 236, and a coin acceptor 238. After the customer has tendered payment, the transaction log 212 is closed and the transaction information is stored. If the actual weight does not match the expected weight, the checkout station 218 signals for an audit. An employee may be signaled to come to the checkout station 218 to conduct the audit. This signalling may be done by any of a number of signalling approaches, such as an alerter 240 which provides an audible or visible signal, and which is connected to the checkout station 218. Upon being signalled, the employee comes to the checkout station 218 and scans the purchases in a conventional manner, accepting payment from the customer at the conclusion of the transaction. Weighing the purchases and comparing the weights of the customer-entered purchases against the actual weight of the order provides assurance that an audit will be conducted only when a discrepancy exists between the items as entered by the customer and the actual items selected.

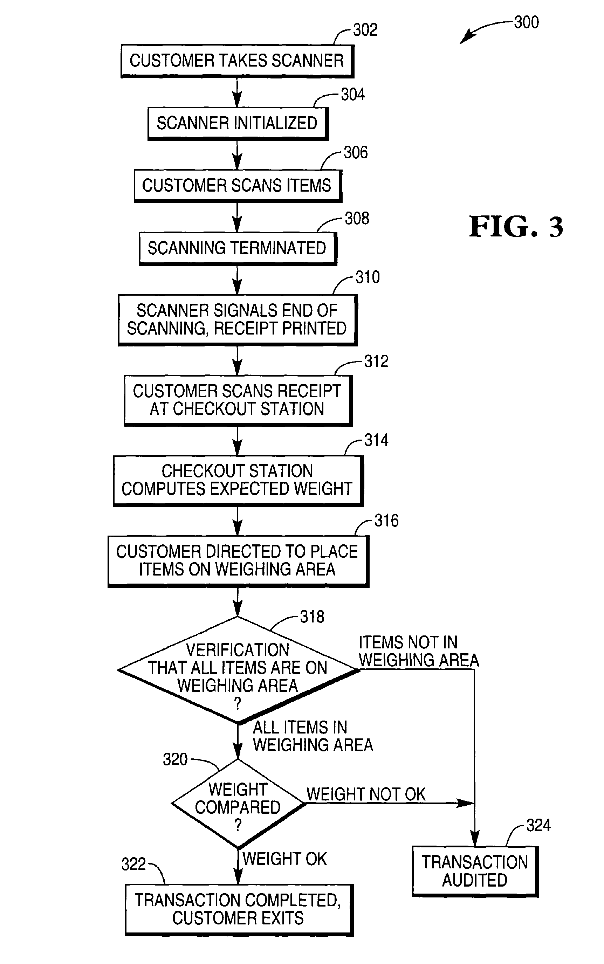

Fig. 3 illustrates a method 300 of automated self-checkout using weight validation, according to the present invention. At step 302, a customer enters the store and picks up a portable scanner for use in the store. At step 304, the scanner is initialized, and a transaction log is set up, the transaction log being identified with the particular scanner selected. The transaction log is preferably maintained in a central processing station, which maintains item information for each item, as well as a transaction log associated with each scanner. At step 306, the customer uses the scanner to scan an item. The scanner transmits the item identification to the central processing station, which performs a price lookup and adds the item identification and price to the transaction log. Step 306 is repeated until the customer has finished shopping. At step 308, the customer indicates that shopping is finished, for example by pressing a designated key on the portable scanner and replacing the scanner on a rack. At step 310, the portable scanner indicates to the central processing station that the customer has finished shopping and the central processing station prints a barcoded receipt identifying the customer's transaction. At step 312, the customer proceeds to a checkout station and scans the barcoded receipt. The checkout station retrieves the transaction from the central computer using the identification on the receipt. At step 314, the checkout station retrieves the weight of each item and computes the expected weight of the order. At step 316, the checkout station directs the customer to place the order on a weighing platform. Depending on system design, this may be accomplished by rolling a cart onto a platform, or by bagging items and placing them on a scale built into a counter which is part of the checkout station. At step 318, the checkout station verifies that all items have been placed in the weighing area. This verification can be accomplished, for example, by a camera focused to provide a view of the checkout station, the view being monitored by a store employee. If all items have not been placed in the weighing area, the process proceeds at step 324 and a store employee approaches the checkout station and manually verifies the transaction. If all items have been placed in the weighing area, the process proceeds at step 320. The order is then weighed and compared against the expected weight. If the expected weights do not match within a predetermined tolerance, the process proceeds at step 324 and a store employee approaches the checkout station and verifies the transaction. If the expected weights do match, the process proceeds at step 322, the self-checkout transaction is completed, and the customer is presented with a total, tenders payment, and leaves the store with the order.

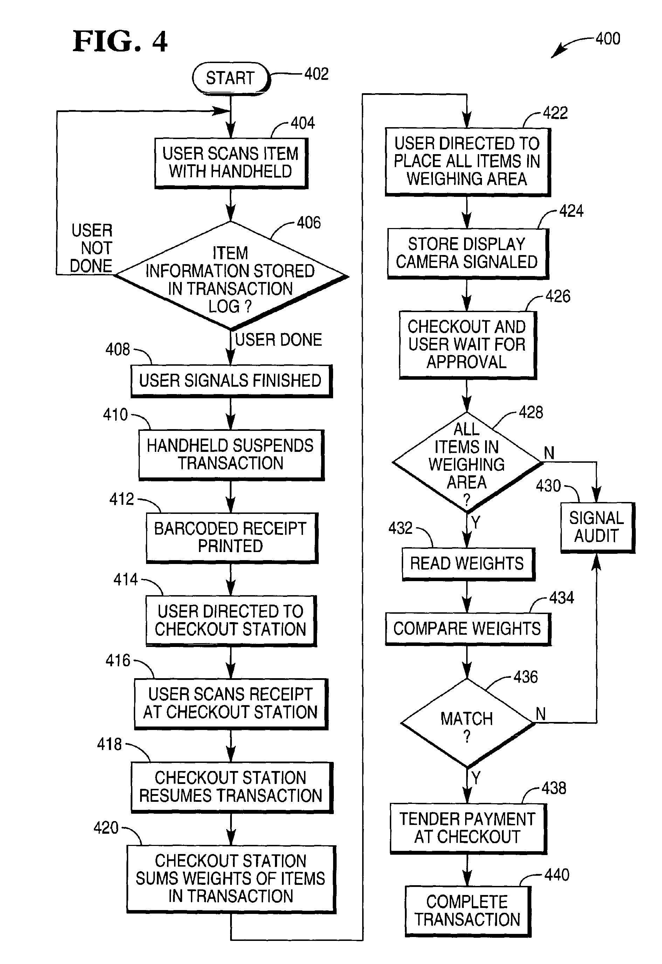

Fig. 4 illustrates the steps of a method 400 of weight-validated self-checkout according to an alternative aspect of the present invention. At step 402, a transaction is initiated. This is suitably done by a customer's selection and activation of a portable scanner such as the scanner 202 of Fig. 2. At initiation of the transaction, a customer transaction log associated with the selected scanner is opened and maintained. At step 404, the user scans an item with the scanner. At step 406, a price lookup is performed for the scanned item and the price and other desired information, such as item barcode information and item description, is stored in the transaction log. If the customer has not finished shopping, the process continues at step 404 and the customer scans another item. If the customer has finished shopping, the process proceeds at step 408 and the customer signals that he or she is finished. Next, at step 410, the portable scanner suspends the transaction. The transaction log is temporarily closed and associated with an identifying number. Next, at step 412, a barcoded receipt is printed which is encoded with information, such as an identifying number, which identifies the transaction log. The process then continues at step 414 and the customer is directed to a checkout station such as the checkout station 218 of Fig. 2. Next, at step 416, the customer scans the receipt at the checkout station. The process then proceeds at step 418. The checkout station retrieves the transaction log which is indicated by the barcoded receipt and resumes the transaction. Next, at step 420, the checkout station computes the expected weight of all items in the transaction log. If the transaction log includes weight information for each item, this information is simply summed to produce the total. Otherwise, the checkout station retrieves weight information for each item in the transaction log and sums the retrieved information to compute a total. Next, at step 422, the user is directed to place all items in a weighing area. The process then proceeds at step 424, and a camera is activated to allow a store employee to remotely view the checkout station in order to make sure that all items have been placed in the weighing area, and a signal is issued to alert a store employee to verify proper placement. Next, at step 426, the checkout station suspends operation and waits for a signal from a store employee allowing the transaction to proceed. The process then proceeds at step 428 and a check is made to determine if all items have been placed in the weighing area. If all items have not been placed in the weighing area, the process proceeds at step 430, a store employee is signaled to audit the transaction and the transaction is concluded manually. If all items have been placed in the weighing area, the process proceeds at step 432 and a reading is taken from a scale in the weighing area to obtain the actual weight of the order. The process then proceeds at step 434 and the actual weight of the order is compared against the expected weight. Next, at step 436, the result is analyzed to determine if the actual weight matches the expected weight within a predetermined tolerance. If the weights are out of tolerance, the process proceeds at step 430, a store employee is signaled to conduct an audit, and the transaction is concluded manually by a store employee. If the weights are within tolerance, the process proceeds at step 438 and the customer is allowed to tender payment. The process then proceeds at step 440 and the transaction is concluded. The checkout may suitably be configured to accept payment directly from the customer by means such as a credit or debit card reader, or a bill and coin acceptor.

While the present invention is disclosed in the context of a presently preferred embodiment, it will be recognized that a wide variety of implementations may be employed by persons of ordinary skill in the art consistent with the above discussion.

## Claims

1. A weight-validating self-checkout system for use in a retail establishment, comprising:
a data reader for use by a customer to gather data during shopping, the data reader being adapted to read identifying data for each item to be purchased by the customer;
a data processor for receiving the identifying data from the data reader and creating a transaction log including identifying information for each item, the data processor being further operative to store and retrieve price and expected weight information associated with the items in the transaction;
a checkout station for receiving the identifying data, the price information, and the expected weight information and processing the transaction; and
a scale associated with the checkout station, the scale being operative to weigh items in the transaction and generate actual weight information for the items in the transaction;
a checkout processor associated with the checkout station, the checkout processor being adapted to receive the expected weight information and the expected weight information, the checkout processor being further operative to signal a retail employee to conduct an audit if the weight of the items does not match the weight information within a predetermined tolerance, the checkout processor being operative to allow completion of the transaction if the weight of the items matches the weight information within the predetermined tolerance.

2. A system as claimed in claim 1, wherein the identifying information includes a barcode for each item.

3. A system as claimed in claim 2, wherein the data reader is a portable scanner adapted to read the barcode for each item to acquire the identifying information for each item.

4. A system as claimed in claim 3, wherein the portable scanner is adapted to transmit the identifying information to the data processor.

5. A system as claimed in any preceding claim, wherein the portable scanner is operative to notify the data processor that the customer has finished shopping and wherein the data processor is operative to store the transaction log and issue a barcoded transaction receipt for the customer identifying the transaction log.

6. A system as claimed in claim 5, wherein the checkout station is operative to read the barcoded transaction receipt submitted by a customer and to retrieve the transaction log, and wherein the checkout processor is operative to retrieve the expected weight information for each item in the transaction log and compute a total expected weight for the items in the transaction.

7. A method for weight-validated customer self-checkout, comprising the steps of:
initializing a portable data reader to open and maintain a transaction log adapted to include identifying information for each item in a customer order;
during an item logging process, entering identifying information for new items into the log until the logging process is complete;
once the logging process is complete, storing the transaction log;
beginning a checkout process and retrieving the transaction log;
retrieving weight information for each item in the transaction log;
computing a total expected weight for all items in the customer order using the weight information;
weighing all items in the customer order to determine an actual total weight;
comparing the actual total weight with the expected total weight; and
signalling for a transaction audit if the actual total weight does not match the expected total weight within a predetermined tolerance.

8. A method as claimed in claim 7, wherein the portable data reader is a customer-operated scanner.

9. A method as claimed in claim 8, wherein the transaction log is associated with a barcoded receipt and wherein the step of retrieving the transaction log includes scanning the barcoded receipt and retrieving the transaction log associated with the barcoded receipt.

10. A method as claimed in claim 9, wherein the step of weighing all items in the customer order includes instructing the customer to place the items in a weighing area, monitoring the transaction to verify that all items are placed in the weighing area, and manually auditing the transaction if all items are not placed in the weighing area.

11. A method as claimed in claim 10, wherein monitoring the transaction to verify that all items are placed in the weighing area includes using a camera to provide a visual view of the checkout area and monitoring the view provided by the camera.
